# EUROPÄISCHE PATENTANMELDUNG

(11) **EP 1 338 870 A2**
(43) Veröffentlichungstag der Anmeldung: **27.08.2003**
(21) Anmeldenummer: 03003884.8
(22) Anmeldetag: 21.02.2003
(51) Int. Cl.: G01D 18/00

(54) **Verfahren zum Kalibrieren eines Sensors**

(30) Priorität: 26.02.2002 DE 10208231
(71) Anmelder: ZF FRIEDRICHSHAFEN AG, 88038 Friedrichshafen (DE)
(72) Erfinder: Frühwirth, Gerhard, 4274 Schönau (DE)

(57) **Zusammenfassung**

Es wird ein Verfahren zum Kalibieren eines Sensors, insbesondere eines Lenkwinkelsensors zum Erfassen des Lenkwinkels eines Fahrzeuges vorgeschlagen, bei dem vorbestimmte Signale des Sensors aufsummiert werden und zum Kalibrieren ein Mittelwert gebildet wird.

## Beschreibung

Die vorliegende Erfindung betrifft ein Verfahren zum Kalibrieren eines Sensors, insbesondere eines Lenkwinkelsensors zum Erfassen einer Lenkposition eines Fahrzeuges.

Aus der Fahrzeugtechnik sind Kalibriersysteme und entsprechende Kalibrierverfahren für Fahrzeuge bekannt. Aus der EP 0 471 286 B1 ist ein Knickwinkelsensor-Kalibrierungssystem und ein Knickwinkelsensor-Kalibrierungsverfahren für Zugfahrzeuge bekannt. Bei derartigen Systemen ist es wichtig, dass das Beugewinkeleingangssignal geeignet kalibriert wird. Dies kann dadurch erreicht werden, dass die Messung dann durchgeführt wird, wenn die Fahrzeuggeschwindigkeit oberhalb eines Bezugswertes liegt und die Krümmung der Bahnkurve den Wert Null annimmt, sowie die erste Ableitung des Krümmungsradius der Bahnkurve während einer vorbestimmten Zeitspanne Null ist. Beim Eintritt der obigen Bedingungen ist der Beugewinkel des Zugfahrzeuges Null und die von dem Beugewinkelsensor erhaltenen Eingangssignale werden entsprechend kalibriert.

Des weiteren ist bekannt, dass z. B. bei Allradfahrzeugen mit einem sogenannten ADM-System ein Lenkwinkelsensor zum Erfassen der Lenkposition des Fahrzeuges vorgesehen ist. Dieser Sensor ist bei einer Geradeausstellung der Lenkung (Mittelstellung) auf einen definierten Wert einzustellen. Es hat sich jedoch gezeigt, dass in Folge von Verschmutzung, Alterung oder mechanischen Verformungen sowie einer ungenauen Justierung eine Verschiebung dieser vorgegebenen Einstellung auftreten kann. Dies ist sehr nachteilig, denn Änderungen der Mittelstellung haben Auswirkungen auf die Genauigkeit der Korrektur des Lenkwinkeleinflusses, z. B. bei der Bildung des Radschlupfes.

Der vorliegenden Erfindung liegt deshalb die Aufgabe zugrunde, ein Verfahren der eingangs genannten Gattung vorzuschlagen, bei dem die vorgenannten Änderungen der Einstellung berücksichtigt werden, sodass eine Abweichung von der Mittelposition keine nachteilige Auswirkung hat.

Diese Aufgabe wird erfindungsgemäß durch die Merkmale des Patentanspruches 1 gelöst. Weitere Vorteile und Ausgestaltungen ergeben sich aus den Unteransprüchen.

Demnach wird ein erfindungsgemäßes Verfahren vorgeschlagen, bei dem vorbestimmte Signale des Sensors aufsummiert werden und zur Kalibrierung ein Mittelwert gebildet wird. Auf diese Weise ist eine Kalibrierung von Sensoren, insbesondere von Lenkwinkelsensoren, mit möglichst wenigen Einflussgrößen realisierbar, sodass durch das erfindungsgemäße Verfahren sichergestellt wird, dass eine Abweichung des Messwertes von der Mittelstellung der Lenkung keine negativen Auswirkungen haben. Ferner ist die Abweichung ein entscheidender Wert für eine mögliche Diagnose, welche anzeigt, wann eine Nachkalibrierung bei dem Sensor erforderlich ist.

Unter der Annahme, dass das Fahrzeug im normalen Verkehr nicht auf Rundkursen unterwegs ist, kann davon ausgegangen werden, dass sich auf einer größeren Wegstrecke durch Mittelung von Links- und Rechtskurven annähernd eine Gerade ergibt.

Gemäß einer Weiterbildung der vorliegenden Erfindung kann vorgesehen sein, dass das Aufsummieren der Signale des Lenkwinkelsensor über eine vorbestimmte Wegstrecke erfolgt und anschließend eine Mittelwertbildung vorgesehen wird. Es ist denkbar, dass diese Wegstrecke einen Wert von ca. 500 Meter bis 1 Kilometer annimmt. Es ist möglich, dass auch andere Werte für die Wegstrecke bei dem erfindungsgemäßen Verfahren verwendet werden.

Im Rahmen einer weiteren Ausgestaltung der vorliegenden Erfindung kann vorgesehen werden, dass das Aufsummieren der Signale unterbrochen wird, insbesondere dann, wenn das Fahrzeug eine vorbestimmte Mindestgeschwindigkeit unterschreitet. Danach kann die Aufsummierung wieder erneut gestartet werden. Die vorbestimmte Mindestgeschwindigkeit des Fahrzeuges kann z. B. 45 bis 60 km/h betragen. Es ist auch denkbar, dass andere Werte für die Mindestgeschwindigkeit des Fahrzeuges verwendet werden, wenn dies bei dem erfindungsgemäßen Verfahren vorteilhaft ist.

Aufgrund der Verwendung von Einflussgrößen, wie z. B. der Wegstrecke, der Geschwindigkeit und der Zeit, ist es auch denkbar, dass die Mittelwertbildung vorzugsweise in einer vorgegebenen Zeit durchgeführt wird, in der sich das Fahrzeug mit einer Geschwindigkeit fortbewegt, welche z. B. über der Mindestgeschwindigkeit liegt. Das Berücksichtigen einer Mindestgeschwindigkeit des Fahrzeuges ergibt sich daraus, dass für die. Lenkradbewegungen nur kleine Änderungen gegenüber der Geradeausstellung möglich sind, da sonst infolge der kleinen Kurvenradien hohe Querbeschleunigungen auftreten können, welches nicht einer normalen Fahrweise entspricht. Dabei können kurzzeitig auftretende Abweichungen von der Geradeausstellung durch die Aufsummierung der Signale des Sensors über die vorbestimmte Wegstrecke im wesentlichen eliminiert werden.

Zur Verbesserung der Genauigkeit und dem Vermeiden von Fehlmessungen kann gemäß einer Weiterbildung der vorliegenden Erfindung vorgesehen sein, dass bei dem erfindungsgemäßen Verfahren das Aufsummieren und die Mittelwertbestimmung mehrmals wiederholt wird, bevor ein endgültiger Wert bestimmt wird. Dieser bestimmte bzw. ermittelte Wert kann dann z. B. in einem Steuergerät des Fahrzeuges in vorteilhafter Weise zur Korrektur verwendet werden. Vorzugsweise kann dieser ermittelte Wert auch in dem Steuergerät oder dergleichen Gerät abgespeichert werden.

Bei dem erfindungsgemäßen Verfahren kann vorgesehen sein, dass Signale beispielsweise von vier Messreihen aufsummiert werden und anschließend geeignete Mittelwerte gebildet werden. Es ist auch denkbar, dass bei den Messreihen bestimmte Werte, wie z. B. die Minimal- und Maximalwerte, nicht berücksichtigt werden und dann aus den verbleibenden Werten der Mittelwert bestimmt wird. Selbstverständlich können auch andere Auswahlkriterien für die Werte, welche nicht weiter beachtet werden sollen, bei dem erfindungsgemäßen Verfahren verwendet werden.

Besonders vorteilhaft ist bei dem erfindungsgemäßen Verfahren, dass sich durch die ermittelte Abweichung von der Mittelstellung ein Korrekturwert bestimmen lässt. Dieser Korrekturwert kann z. B. in dem Steuergerät oder auch in einer anderen Einrichtung des Fahrzeuges abgespeichert werden. Durch diesen Korrekturwert kann aus dem Messwert des Sensorsignals ein die Abweichung berücksichtigender Wert gebildet werden, indem man den Korrekturwert dazu addiert. Es ist auch möglich, dass eine andere Vorgehensweise zum Bestimmen des die Abweichung berücksichtigenden Wertes vorgesehen wird.

Die Überwachung des Korrekturwertes zur Einhaltung bestimmter Toleranzen ist besonders entscheidend für eine Fehlerdiagnose und erlaubt darüber hinaus eine Einschätzung, wann der Sensor bzw. die Sensoreinstellung entsprechend nachjustiert werden sollte. Besonders vorteilhaft ist bei dem erfindungsgemäßen Verfahren, dass eine Kalibrierung ermöglicht wird, welche mit möglichst wenig Einflussgrößen, nämlich dem Sensorsignal und der Fahrzeuggeschwindigkeit, durchführbar ist.

Es ist auch denkbar, dass das erfindungsgemäße Verfahren bei anderen Sensoren als bei Lenkwinkelsensoren eingesetzt wird.

## Patentansprüche

1. Verfahren zum Kalibrieren eines Sensors, insbesondere eines Lenkwinkelsensors zum Erfassen der Lenkposition eines Fahrzeuges, **dadurch gekennzeichnet, dass** vorbestimmte Signale des Sensors aufsummiert werden und dass zum Kalibrieren ein Mittelwert gebildet wird.

2. Verfahren nach Anspruch 1, **dadurch gekennzeichnet, dass** als Signale Lenkwinkelsignale über eine vorbestimmte Wegstrecke aufsummiert werden.

3. Verfahren nach Anspruch 2, **dadurch gekennzeichnet, . dass** als Wegstrecke eine Distanz von etwa 500 Metern bis 1 Kilometer verwendet wird.

4. Verfahren nach einem der Ansprüche 1 bis 3, **dadurch gekennzeichnet, dass** das Aufsummieren der Signale des Sensors unterbrochen wird, wenn das Fahrzeug eine vorbestimmte Mindestgeschwindigkeit unterschreitet, wobei danach die Aufsummierung der Signale wieerneut durchgeführt wird.

5. Verfahren nach Anspruch 4, **dadurch gekennzeichnet, dass** als Mindestgeschwindigkeit ein Wert von etwa 45 bis 60 km/h verwendet wird.

6. Verfahren nach einem der Ansprüche 1 bis 5, **dadurch gekennzeichnet, dass** für die Mittelwertbildung eine vorbestimmte Zeit vorgegeben wird, in der das Fahrzeug eine vorbestimmte Mindestgeschwindigkeit nicht unterschreitet.

7. Verfahren nach einem der Ansprüche 1 bis 6, **dadurch gekennzeichnet, dass** die Mittelwertbildung mehrfach wiederholt wird und dass der dabei ermittelte Wert in einem Steuergerät des Fahrzeuges zur Kalibrierung verwendet wird.

8. Verfahren nach Anspruch 7, **dadurch gekennzeichnet, dass** der ermittelte Wert in dem Steuergerät des Fahrzeugs gespeichert wird.

9. Verfahren nach einem der Ansprüche 1 bis 8, **dadurch gekennzeichnet , dass** als Signale vier Messreihen verwendet werden und die daraus ermittelten Werte gemittelt werden.

10. Verfahren nach Anspruch 9, **dadurch gekennzeichnet, dass** Minimal- und Maximalwerte bei jeder Messreihe nicht berücksichtigt werden und aus den verbleibenden Werten jeder Messreihe ein Mittelwert gebildet wird.

11. Verfahren nach einem der Ansprüche 1 bis 10, **dadurch gekennzeichnet, dass** aus dem ermittelten Wert eine Abweichung von der Mittelstellung der Lenkung zum Bilden eines Korrekturwertes gebildet wird.

12. Verfahren nach Anspruch 11, **dadurch gekennzeichnet, dass** der Korrekturwert in dem Steuergerät des Fahrzeuges gespeichert wird.

13. Verfahren nach Anspruch 11 oder 12, **dadurch gekennzeichnet, dass** zur Nachjustierung der Einstellung des Sensors der Korrekturwert hinsichtlich einer vorgegebenen Toleranz überwacht wird.
